# EUROPEAN PATENT APPLICATION

(11) **EP 1 376 581 A2**
(43) Date of publication of application: **02.01.2004**
(21) Application number: 03252952.1
(22) Date of filing: 12.05.2003
(51) Int. Cl.: G11B 27/00

(54) **Information recording/reproducing apparatus, list generation method and information recorded medium**

(30) Priority: 03.06.2002 JP 2002161089
(71) Applicant: Pioneer Corporation, Tokyo-to (JP); Tech Experts Incorporation, Tokyo-to (JP)
(72) Inventor: Sugino, Ryoji, c/o Pioneer Corporation, Tokyo-to (JP); Denda, Akihiro, /o Pioneer Corporation, Kawagoe-shi, Saitama-ken (JP); Nonaka, Yoshiya, c/o Pioneer Corporation, Kawagoe-shi, Saitama-ken (JP)
(74) Representative: Townsend, Victoria Jayne

(57) **Abstract**

An information recording/reproducing apparatus which reproduces a programinformationfrom an information database (11) recording a plurality of pieces of program information and program management information corresponding to each piece of the program information, includes : a search condition input device (8, 9) which receives a search condition for the program information from a user; a program information identification device(8) which identifies the program information that satisfies the received search condition based on the program management information in the information database(11); a list generation device(8) which generates a list of the identified program information; and a list recording device (8) which records the generated list in recording medium by associating it with the search condition.

## Description

### BACKGROUND OF THE INVENTION

### Field of the Invention:

The present invention relates to an information recording/reproducing apparatus which reproduces a program information from an information database recording a plurality of pieces of program information and program management information corresponding to each piece of the program information.

### Description of the Related Art:

With increases in capacity of recording media such as HD (Hard Disk) and advancements in data compression technologies such as MP3 (MPEG Audio Layer 3) and ATRAC3 (Adaptive TRansform Acoustic Coding 3 ) , users can now record (copy) program information such as music data or video data contained in a number of CD (Compact Disc) , MD (Mini Disc) , and/or DVD (Digital Versatile Disc) to a single recording medium (e.g., HD) using an information recording/reproducing apparatus to reproducing from the single recording medium.

Such a conventional information recording/reproducing apparatus allows the user, for example, to create a play list by selecting desired music data from a large number of pieces of music data recorded on a recording medium. Conventionally, to create such a play list, for example, the user makes music data files listed by searching for them based on some search condition and selects and registers desired music data files one by one from among the listed music data files.

However, it is a very laborious task to select and register desired music data files one by one from a list. Besides, if music data is newly recorded when there are a number of such files, it is also a complicated task to select a play list and register the music data file in the play list.

### SUMMARY OF THE INVENTION

It is therefore an object of the present invention to provide an information recording/reproducing apparatus, a list generation method and an information recorded medium which can provide a list relating to more usable program information.

The above object of the present invention can be achieved by an information recording/reproducing apparatus which reproduces a program information from an information database recording a plurality of pieces of program information and program management information corresponding to each piece of the program information, provided with: a search condition input device which receives a search condition for the program information from a user; a program information identification device which identifies the program information that satisfies the received search condition based on the program management information in the information database; a list generation device which generates a list of the identified program information; and a list recording device which records (stores) the generated list in recording medium(memory) by associating it with the search condition.

According to the present invention, since the program information which satisfies a search condition entered by the user, is identified and a list of the program information automatically is generated and recorded, it allows the user to create and record a list of favorite program information easily. Thus, it can save the user the trouble of selecting pieces of program information one by one from the information database and registering them in a play list. Consequently, it can provide highly convenient list of program information.

In one aspect of the information recording/reproducing apparatus of the present invention, the apparatus further includes: a list display device which displays the generated list on a display screen.

According this aspect, the user can see the generated list on the display screen.

In another aspect of the information recording/reproducing apparatus of the present invention, the apparatus further includes: a list display instruction input device which receives an instruction to display the list from the user; and a list display device which reads the list from the recording medium and displays it on a display screen when the instruction to display the list is received.

According this aspect, the list is read out from the recording medium and is displayed it on the display screen any time by user's instruction.

In further aspect of the information recording/reproducing apparatus of the present invention, the apparatus further includes: a selection input device which receives a selection of program information from the user based on the generated list; a reproducing device which reproduces the selected program information.

According this aspect, user can select program information to be reproduced from the list.

In still further aspect of the information recording/reproducing apparatus of the present invention, the apparatus further includes: an information recording device which newly records program information having program management information in the information database; and a program information adding device which determines whether the program information to be newly recorded satisfies the search condition associated with the list recorded in the recording medium based on theprogrammanagementinformation corresponding to the program information and which adds, if the search condition is satisfied, the program information to the list associated with the search condition.

According this aspect, the program information newly recorded in the database can be automatically added to the list corresponding to the search condition. Thus, it can provide a list of program information more usable.

The above object of the present invention can be achieved by a list generation method for an information recording/reproducing apparatus which reproduces a program information from an information database recording a plurality of pieces of program information and program management information corresponding to each piece ofthe programinformation, provided with: a process of receiving a search condition for the program information from a user; a process of identifying the program information that satisfies the received search condition based on the program management information in the information database; a process of generating a list of the identified program information; and a process of recording the generated list in recording medium by associating it with the search condition.

In one aspect of the list generation method of the present invention, the method further includes: a process of newly recording program information having program management information in the information database; and a process of determining whether the program information to be newly recorded satisfies the search condition associated with the list recorded in the recording medium based on the program management information corresponding to the program information and adding, if the search condition is satisfied, the program information to the list associated with the search condition.

The above object of the present invention can be achieved by an information recorded medium wherein a program for a computer which reproduces a program information from an information database recording a plurality of pieces of program information and program management information corresponding to each piece of the program information, is recorded so as to be read by the computer, the program makes the computer function as: receiving a search condition for the program information from a user; identifying the program information that satisfies the received search condition based on the program management information in the information database; generating a list of the identified program information; and recording the generated list in recording medium by associating it with the search condition.

In one aspect of the information recorded medium of the present invention, the program makes the computer function as: newly recording program information having program management information in the information database; and determining whether the program information to be newly recorded satisfies the search condition associated with the list recorded in the recording medium based on the program management information corresponding to the program information and adding, if the search condition is satisfied, the program information to the list associated with the search condition.

### BRIEF DESCRIPTION OF THE DRAWINGS

FIG. 1 is a schematic block diagram of an audio apparatus;
FIG. 2 is a flowchart showing a list generation process performed by a controller 8;
FIGs. 3A and 3B are a diagram showing an example of a search condition input screen on display screen of a operation/display panel 9;
FIG. 4 is a diagram showing an exemplary list of music data on the display screen of the operation/display panel 9 in the list generation process;
FIG. 5 is a flowchart showing a program information adding process performed by the controller 8; and
FIG. 6 is a diagram showing an exemplary list of music data on the display screen of the operation/display panel 9 in the program information adding process.

### DETAILED DESCRIPTION OF THE PREFERRED EMBODIMENTS

A preferred embodiment of the present invention will be described with reference to the accompanying drawings. Incidentally, described below is an embodiment in which the present invention is applied to an audio apparatus.

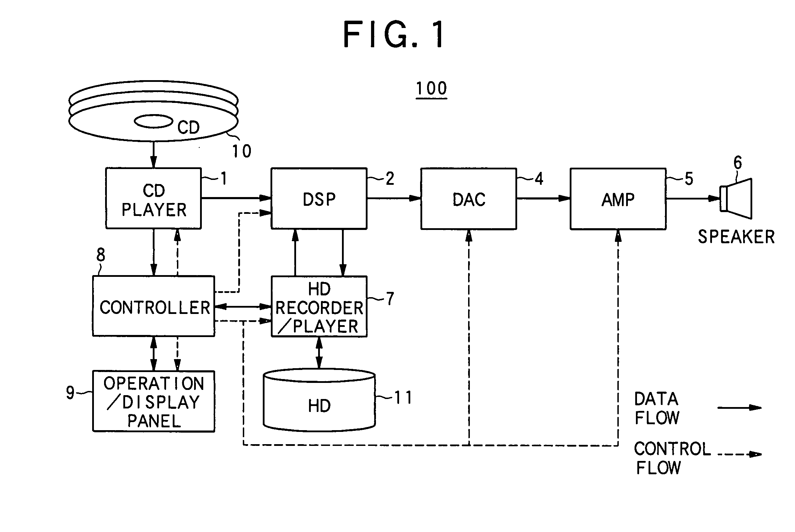

First, configuration and functions of an audio apparatus according to this embodiment will be described with reference to FIG. 1.

FIG. 1 is a schematic block diagram of the audio apparatus. As shown in FIG. 1, the audio apparatus 100 includes a CD player 1 which reproduces music data as program information recorded on a CD 10, a DSP (Digital Signal Processor) 2 which outputs the music data reproduced by the CD player 1 after performing digital signal processing on them at high speed, a DAC (Digital-to-Analog Converter) 4 which performs digital-to-analog conversion on the music data outputted from the DSP 2 and outputs the resulting analog audio signal, an AMP (Amplifier) 5 which amplifies the analog audio signal outputted from the DAC 4 and outputs the resulting signal, a speaker 6 which outputs the analog audio signal from the AMP 5 as sound wave, a HD recorder/player 7 which serves as an information recording device for recording the music data from the DSP 2 on an HD 11 and as information reproducing device for reproducing the music data recorded on the HD 11, controller 8 which controls operation of the above components, and operation/display panel 9 which receives instructions entered by the user and outputs them to the controller 8 or displays predetermined information.

The CD player 1 has a mounting mechanism for mounting the CD 10, a pickup for optically reading the music data recorded on the CD 10, a spindle motor for rotationally driving the CD 10, a servo circuit for servo-controlling the spindle motor and pickup, etc. It reproduces music data (LRCK, BCK, BDATA, C2PO, or other digital data signals) and outputs them to the DSP 2. Also, the CD player 1 reads TOC (Table Of Content) information recorded in the innermost part of the CD 10 and outputs it to the controller 8. As is well known, the TOC information contains management information such as truck numbers, the number of pieces of music data, and reproducing (playback) time. Also, the CD player 1 can read text information and outputs it to the controller 8 if the CD 10 is not protected. The text information contains, for example, song titles, the album title, the artist name, and the genre. Since known technology can be used for the CD player 1, detailed description thereof will be omitted. Incidentally, the CD player 1 may be an ATAPI apparatus.

Also, although this embodiment uses the CD player 1, this embodiment may also use a DVD player for reproducing music data recorded on DVD, a MD player for reproducing music data recorded on MD, a card media player for reproducing music data recorded on card-type recording medium such as memory stick, or a combination thereof.

The DSP 2 has a logic circuit and memory circuit. It performs digital signal processing on the music data reproduced by the CD player 1. Specifically, it performs known acoustic treatment such as EFM (Eight to Fourteen Modulation) to the music data of RF (Radio Frequency) signal reproduced by the CD player 1. Then, it outputs the music data to the DAC 4 and the HD recorder/player 7. Incidentally, the DSP 2 may output the music data to the HD recorder/player 7 after compressing them in a predetermined format such as MP3 or ATRAC3.

The HD recorder/player 7 has a buffer memory, a HDD (Hard Disk Drive), etc. The music data outputted from the DSP 2 is stored temporarily in the buffer memory, and then recorded on the HD 11 by the HDD. Moreover, the music data reproduced from the HD 11 by the HDD is stored temporarily in the buffer memory, and then output to the DSP 2.

A music database as an information database can be constructed logically on the HD 11. The music data outputted from the DSP 2 is recorded in the music database, being associated with program management information (e. g. , the TOC information and text information contained in the source CD 10) outputted from the controller 8. When the music data is recorded, the user can register music title, genre, sale date and the like in the music database as program management information via the operation/display panel 9. Also, when the music data are recorded, the controller 8 can download music title and the like as program management information by accessing a server equipped with a predetermined database on the Internet via the communications unit 3 and register them in the music database.

Since known technology can be used for the HD recorder/player 7, detailed description thereof will be omitted. Also, although this embodiment uses the HD recorder/player 7, this embodiment may use CD-R recorder/player for recording and reproducing music data to/from a CD-R, DVD-R/W recorder/player for recording and reproducing music data to/from a DVD-R/W, card media player for recording and reproducing music data to/from a card-type recording medium such as a memory stick, or a combination thereof.

The controller 8 has a CPU which has arithmetic capabilities, a working RAM, a ROM which stores various processing programs and data, a non-volatile memory such as EEPROM (Electrically Erasable Programmable Read Only Memory) as recording medium for recording a list of music data (described later), etc. It controls reproducing operation of the CD player 1 and recording and reproducing operation of the HD recorder/player 7 under instructions from the operation/display panel 9. Also, the controller 8 makes the HD recorder/player 7 record the TOC information and text information outputted from the CD player 1 in the music database on the HD 11 by associating them with each piece of music data.

Also, the ROM of the controller 8 stores a list generation program, according to which the controller 8 having a computer functions as a program information identification device, a list generation device, a list recording device, a list display device, and a program information adding device.

More specifically, upon receiving a search condition (e . g. , music title, genre, artist name, release time, or the like) for music data from the user via the control/display panel 9, the controller 8 functioning as the program information identification device identifies the music data which satisfy the search condition, by referring to the program management information (based on the program management information) in the music database on the HD 11 via the HD recorder/player 7.

Also, the controller 8 functions as the list generation device and generates a list (play list) of the identified music data. The controller 8 also functions as the list recording device and records the generated list of music data in the non-volatile memory by associating it with the search condition. The controller 8 also functions as the list display device and displays the generated list of music data on the display screen of the operation/display panel 9.

Furthermore, the controller 8 functions as the program information adding device and determines whether the music data to be newly recorded in the music database on the HD 11 satisfy the search condition associated with any list of music data recorded in the non-volatile memory based on the program management information corresponding to the music data. And the controller 8 newly adds, if the search condition is satisfied, information about the music data to the list associated with the search condition.

The operation/display panel 9, which is equipped with operation buttons to allow the user to enter instructions, functions as a search condition input device for receiving a search condition for music data from the user, a list display instruction input device for receiving an instruction to display the list of music data from the user, and a selection input device for receiving a selection of music data from the user based on the generated list. The operation/display panel 9 has an indicator for displaying predetermined information and displays the list on a display screen of the indicator.

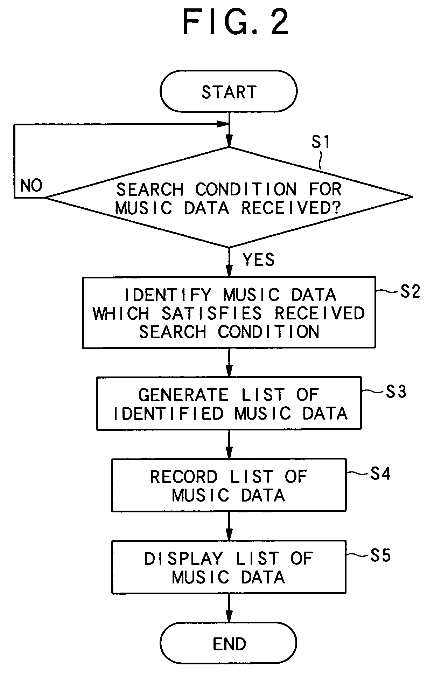

Next, a list generation process on the audio apparatus 100 will be described with reference to FIGS. 2 to 4.

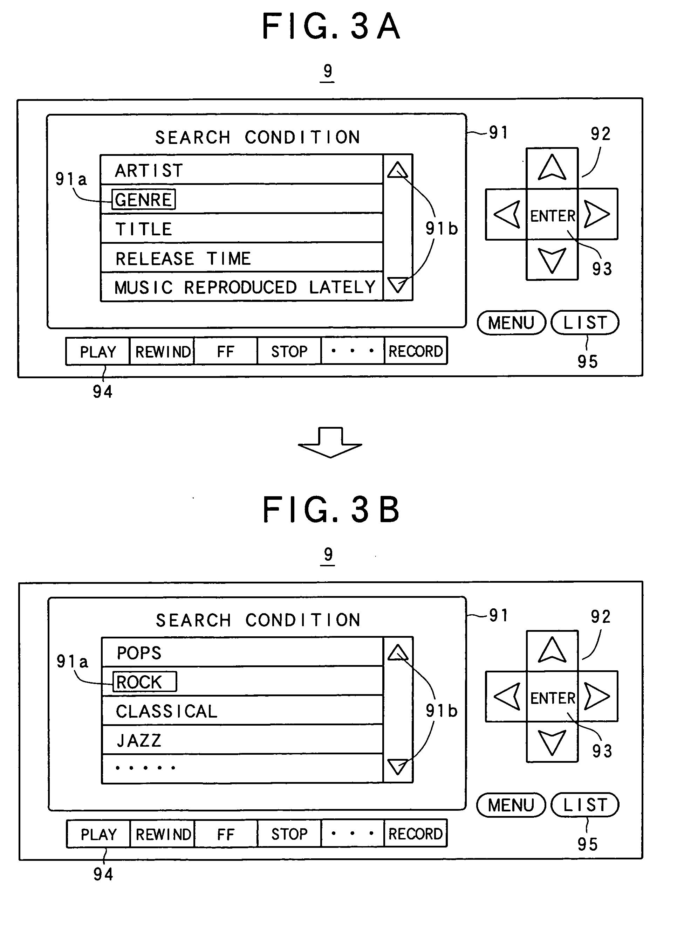

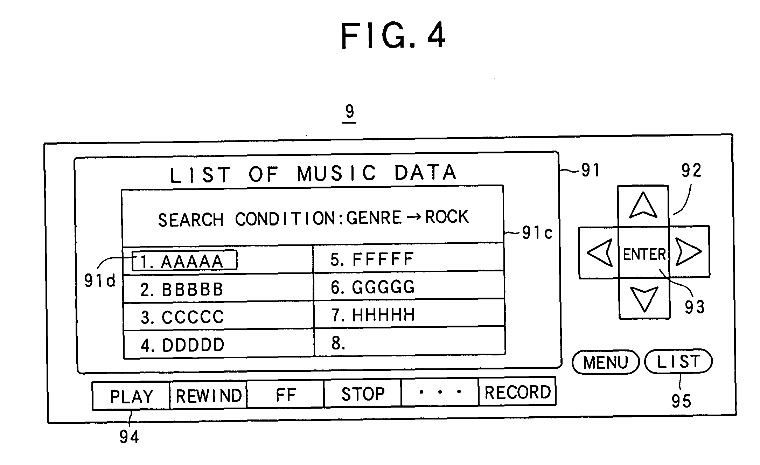

FIG. 2 is a flowchart showing a list generation process performed by the controller 8. FIGS. 3A and 3B are a diagram showing an example of a search condition input screen on display screen of a operation/display panel. FIG. 4 is a diagram showing an exemplary list of music data on the display screen of the operation/display panel 9 in the list generation process.

The process shown in FIG. 2 is started when the user presses a predetermined operation button on the operation/display panel 9 to give an instruction to start list generation. As shown in FIG. 3A, the search condition input screen for music data is brought up on the display screen 91 of the indicator on the operation/display panel 9. The search condition input screen displays a plurality of search conditions (artist, genre, title ...), where the condition ("Genre," in this example) indicated by a cursor 91a is the currently selected condition.

In addition to the search conditions shown in the example of FIG. 3A, other search conditions are available, which can be displayed by scrolling in the direction of an arrow 91b using a cross-shaped button 92 . When the user selects a desired search condition by operating the cross-shaped button 92 and presses an Enter button 93, subordinate search conditions of the selected search condition are displayed (listed) as shown in FIG. 3B. When the user presses the Enter button 93 after selecting, for example, "Rock" with the cursor 91a in FIG. 3B, the operation/display panel 9 receives "Rock" as a search condition for music data and the controller 8 judges that the search condition is received (Step S1) and goes to Step S2.

The search conditions, for example, were tabulated hierarchically and have been stored either in the non-volatile memory of the controller 8 or on the HD 11. Alternatively, the search conditions may be registered in a table based on the program management information corresponding to the music data recorded in the music database on the HD 11 or registered in a table by the user.

Besides, although this embodiment allows the user to select a desired search condition from available search conditions registered in advance as described above, it is also possible to allow the user to directly enter a search condition in an input field on the screen by operating the cross-shaped button 92, etc. of the operation/display panel 9.

In Step S2, the controller 8 identifies the music data which satisfies the received search condition by referring and according, via the HD recorder/player 7, to the program management information of the music data recorded in the music database on the HD 11. Specifically, as described above, the music data recorded in the music database on the HD 11 is associated with the program management information, and if the search condition received in Step S1 is "Rock," the controller 8 identifies the music data which belong to the genre of "rock" based on the program management information.

Incidentally, although the music data which satisfies a single search condition, for example, "rock," is identified according to this embodiment, this is not restrictive. For example, it is possible to narrow down the search using two or more search condition ANDed together before identifying music data. For example, music data maybe identified using both release time (past two years) and artist name as search condition.

Next, the controller 8 generates a list (list data) of the identified music data (Step S3) based, for example, on the titles of the identified music data. Then, the controller 8 records the generated list in the non-volatile memory by associating it with the search condition (Step S4). Then, the controller 8 displays the generated list (list data) on the display screen 91 of the indicator on the operation/display panel 9 (Step S5).

In this way, as shown in FIG. 4, the list 91c of music data presented on the display screen 91 of the indicator on the operation/display panel 9 contains the search condition "Genre" and "Rock" selected by the user. The list 91c displays, in sequence, the titles ("AAAAA," etc.) of the music data identified based on the search condition.

In the example of FIG. 4, a cursor 91d is displayed on the title of piece of music data "AAAAA" in the list 91c. The cursor 91d moves over titles of piece of music data as the cross-shaped button 92 is manipulated. This allows the user to select a title of piece of music data in the list 91c.

Then, when the user presses a Play button 94, for example, and the selection of music data is accepted, the controller 8 makes the HD recorder/player 7 reproducing the music data under the cursor 91d, i.e., selected by the user. Consequently, the HD recorder/player 7 reproduces the music data from the HD 11.

Since a list once generated is recorded in the non-volatile memory, even after it is erased from the display screen 91 of the indicator on the operation/display panel 9, the controller 8 can read it out of the non-volatile memory and display it on the display screen 91 when the user presses a List button 95, for example.

Instead of reading a list from the non-volatile memory and displaying it on the display screen 91 of the indicator on the operation/display panel 9, it may be constituted so that the music data in the list will be reproduced when a predetermined button is pressed.

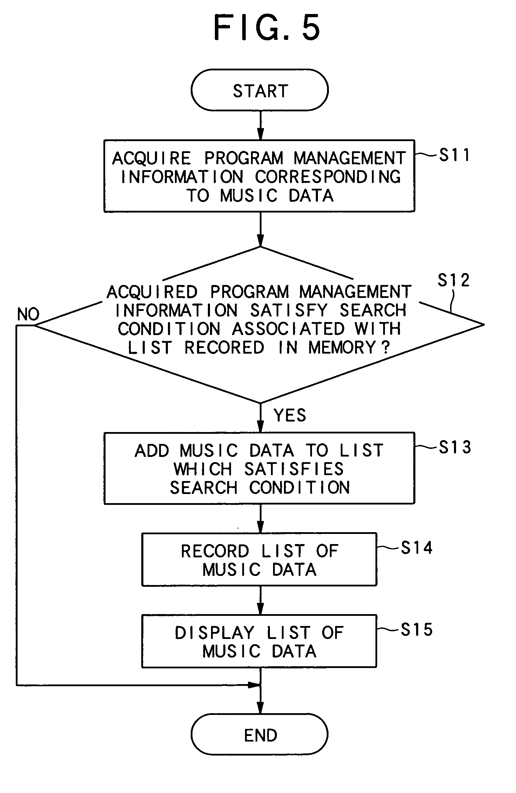

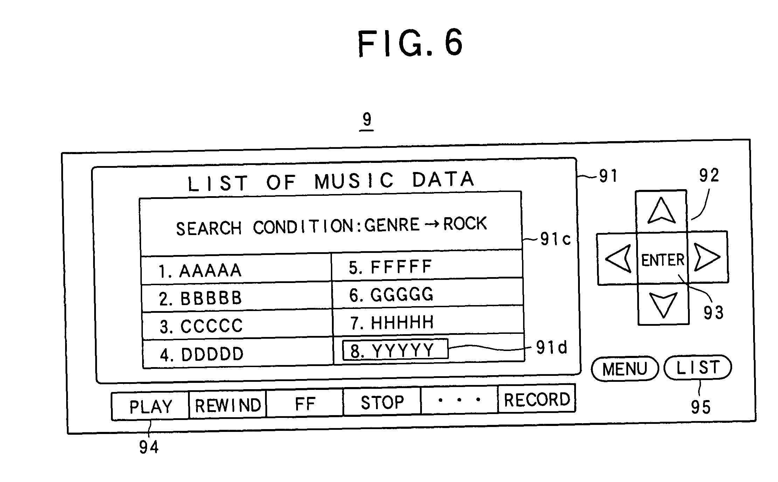

Next, a program information adding process on the audio apparatus 100 will be described with reference to FIGS. 5 and 6. FIG. 5 is a flowchart showing a program information adding process performed by the controller 8. FIG. 6 is a diagram showing an exemplary list of music data on the display screen of the operation/display panel 9 in the program information adding process.

The process shown in FIG. 5 is started when a music data recorded on the CD 10 is recorded on the HD 11. In other words, it is started when the controller 8 gives a reproducing instruction to the CD player 1, and a recording instruction to the HD recorder/player 7 at the instruction of the user via the operation/display panel 9.

In the process in FIG. 5, first, the controller 8 acquires, from the CD player 1, the program management information corresponding to the music data reproduced from the CD 10 (Step S11). Then, the controller 8 determines whether the music data reproduced from the CD 10 satisfies a search condition associated with a list of music data recorded in the non-volatile memory, based on the program management information (Step S12). If the search condition associated with a list of music data recorded in the non-volatile memory is "rock, " for example, the controller 8 determines whether the music data newly recorded belongs to the genre of "rock, " based on the program management information corresponding to the music data.

Incidentally, if two or more lists are recorded in the non-volatile memory, the controller 8 determines on a list-by-list basis whether the music data reproduced satisfies a search condition associated with the given list.

Then, the controller 8 adds information about the music data which satisfies the search condition to the list of music data associated with the search condition. For example, it adds the title of the music data to the list (Step S13).

Incidentally, if the music data satisfies a search condition associated with two or more lists, information about the music data is added to all these lists.

Then, the controller 8 records (updates) the list to which the music data (title) is added in the non-volatile memory (Step S14). Then, the controller 8 displays the list on the display screen 91 of the indicator on the operation/display panel 9 (Step S15).

In this way, as shown in FIG. 6, the list 91c of music data presented on the display screen 91 of the indicator on the operation/display panel 9 contains the title ("YYYYY") of the music data (under the cursor 91d) added to the list 91c. The music data thus added is reproduced from the HD 11 by the HD recorder/player 7 under the control of the controller 8 when the user selects title of the music data with the cursor 91d and presses a Play button 94.

As described above, this embodiment allows the user to create and record a play list of favorite music data easily based on the program management information corresponding to the music data recorded in the music database on the HD 11 as well as on a search condition entered by the user. Thus, it can save the user the trouble of selecting music data one by one from the music database on the HD 11 and registering them in a play list.

Besides, music data to be newly recorded in the music database on the HD 11 can be added automatically to any existing play list of music data that satisfies search condition.

Also, although a list of titles of music data has been cited as an example of a list of music data in the above embodiment, this is not restrictive. A list of other elements (e.g., track numbers) may also be used.

Also, although music data have been cited as an example of program information in the above embodiment, the present invention is not limited to this and may also be applied to video data, document data, or even programs which execute predetermined processes.

Also, although a non-volatile memory is used as recording medium for recording the list in the above embodiment, this is not restrictive. The list may be recorded in the HD 11.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information recording/reproducing apparatus which reproduces a program information from an information database (11) recording a plurality of pieces of program information and program management information corresponding to each piece of the program information, **characterized in that** the apparatus (100) comprises:
a search condition input device (8,9) which receives a search condition for the program information from a user;
a program information identification device (8) which identifies the program information that satisfies the received search condition based on the program management information in the information database (11);
a list generation device (8) which generates a list of the identified program information; and
a list recording device (8) which records the generated list in recording medium by associating it with the search condition.

2. The information recording/reproducing apparatus according to claim 1, further comprising:
a list display device (8, 9) which displays the generated list on a display screen.

3. The information recording/reproducing apparatus according to claim 1, further comprising:
a list display instruction input device (8,9) which receives an instruction to display the list from the user; and
a list display device (8, 9) which reads the list from the recording medium and displays it on a display screen when the instruction to display the list is received.

4. The information recording/reproducing apparatus according to any one of claims 1 to 3, further comprising:
a selection input device (8, 9) which receives a selection of program information from the user based on the generated list;
an information reproducing device (7,8) which reproduces the selected program information.

5. The information recording/reproducing apparatus according to any one of claims 1 to 4, further comprising:
an information recording device (7, 8) which newly records program information having program management information in the information database; and
a program information adding device (8) which determines whether the program information to be newly recorded satisfies the search condition associated with the list recorded in the recording medium based on the program management information corresponding to the program information and which adds, if the search condition is satisfied, the program information to the list associated with the search condition.

6. The information recording/reproducing apparatus according to any one of claims 1 to 5, wherein the program information is a music data.

7. A list generation method for an information recording/reproducing apparatus which reproduces a program information from an information database recording a plurality of pieces of program information and program management information corresponding to each piece of the program information, **characterized in that** the method comprises:
a process of receiving a search condition for the program information from a user;
a process of identifying the program information that satisfies the received search condition based on the program management information in the information database;
a process of generating a list of the identified program information; and
a process of recording the generated list in recording medium by associating it with the search condition.

8. The list generation method according to claim 7, further comprising:
a process of newly recording program information having program management information in the information database; and
a process of determining whether the program information to be newly recorded satisfies the search condition associated with the list recorded in the recording medium based on the program management information corresponding to the program information and adding, if the search condition is satisfied, the program information to the list associated with the search condition.

9. An information recorded medium wherein a program for a computer which reproduces a program information from an information database recording a plurality of pieces of program information and program management information corresponding to each piece of the program information, is recorded so as to be read by the computer, the program makes the computer function as:
receiving a search condition for the program information from a user;
identifying the program information that satisfies the received search condition based on the program management information in the information database;
generating a list of the identified program information; and
recording the generated list in recording medium by associating it with the search condition.

10. The information recorded medium according to claim 9, wherein the program makes the computer function as:
newly recording program information having program management information in the information database; and
determining whether the program information to be newly recorded satisfies the search condition associated with the list recorded in the recording medium based on the program management information corresponding to the program information and adding, if the search condition is satisfied, the program information to the list associated with the search condition.
